# EUROPEAN PATENT APPLICATION

(11) **EP 2 924 568 A1**
(43) Date of publication of application: **30.09.2015**
(21) Application number: 14193718.5
(22) Date of filing: 18.11.2014
(51) Int. Cl.: G06F 9/455, G06F 9/54

(54) **EXECUTION METHOD AND DEVICE FOR PROGRAM STRING**

(30) Priority: 28.03.2014 CN 201410124553
(71) Applicant: Xiaomi Inc., Beijing 100085 (CN)
(72) Inventor: Tang, Mu, Haidian District (CN); Gao, Sitai, Haidian District (CN); Zhang, Xibei, Haidian District (CN); Ye, Hao, Haidian District (CN)
(74) Representative: Hanna, Peter William Derek

(57) **Abstract**

The present disclosure relates to a computer-implemented execution method and device for a program string. The method includes: acquiring (S11) a current program to be executed from a program string; determining (S12) an execution action of the current program and executing the execution action according to an executable content type of the current program and an execution result of a preceding program executed before the current program. When executing a program string composed by multiple programs, to determine the execution action of the current program and execute the execution action according to an executable content type of the current program and an execution result of the preceding program executed before the current program, such that the resource generated by the program execution may be mutually used among all the programs in the program string, provides quick operation more intelligently.

## Description

### TECHNICAL FIELD

The present disclosure relates to the field of communication, and particularly, to an execution method and device for a program string.

### BACKGROUND

In related technologies, most mobile terminals now have a touch screen and only a few physical buttons. In order to avoid inadvertently touching the touch screen, when the mobile terminal is not used, the touch screen of the mobile terminal needs to be set in a locked state. When the mobile terminal is in use, the user needs firstly to unlock the touch screen and then control the mobile terminal with the touch screen.

Only a limited number of functions can be controlled with a limited number of physical buttons, so most operations can only be achieved with the help of the touch screen. Therefore, every time the mobile terminal is used, there is a need to carry out the operations of lighting up the screen, unlocking the screen, selecting the application and executing functions, which is tedious and time consuming, and involves additional processing time.

### SUMMARY

The present invention provides an execution method and device for a program string in accordance with claims which follow, to solve the problem existing in the related technologies.

An execution method for a program string is provided according to a first aspect of the embodiments of the present disclosure. The method may include: acquiring a current program to be executed from a program string; and
determining an execution action of the current program and executing the execution action according to an executable content type of the current program and an execution result of a preceding program executed before the current program.

An execution device for a program string is provided according to a second aspect of the embodiments of the present disclosure. The device may include: a program acquiring unit configured to acquire a current program to be executed from the program string; and

a processing unit configured to determine an execution action of the current program and executing the execution action according to an executable content type of the current program and an execution result of a preceding program executed before the current program.

An execution device for a program string is provided according to a third aspect of the embodiments of the present disclosure. The device may include:
a processor;
a memory for storing instructions executable by the processor;
wherein, the processor is configured to:
acquire a current program to be executed from the program string; and
determine an execution action of the current program and execute the execution action according to an executable content type of the current program and an execution result of a preceding program executed before the current program.

A computer program is provided according to a fourth aspect of the embodiments of the present disclosure. The computer program performs, when being executed on a processor of a device, any one of the above methods.

The technical solutions provided by the embodiments of the present disclosure may include the following advantageous effect: when executing a program string composed by multiple programs, to determine the execution action of the current program and execute the execution action according to an executable content type of the current program and an execution result of the preceding program executed before the current program, such that the resource generated by the program execution may be mutually used among all the programs in the program string, providing quick operation more intelligently.

### BRIEF DESCRIPTION OF THE DRAWINGS

The accompanying drawings, which are incorporated in and constitute a part of this description, illustrate embodiments according with the invention and together with the description serve to explain the principle of the present invention.
Fig. 1 is a flowchart of an execution method for the program string according to an exemplary embodiment.
Fig. 2 is a schematic diagram of an operation interface according to an exemplary embodiment.
Fig. 3 is a schematic diagram of an operation interface according to an exemplary embodiment.
Fig. 4 is a flowchart of an execution method for the program string according to an exemplary embodiment.
Fig. 5 is a flowchart of an execution method for the program string according to an exemplary embodiment.
Fig. 6 is a flowchart of an execution method for the program string according to an exemplary embodiment.
Fig. 7 is a flowchart of an execution method for the program string according to an exemplary embodiment.
Fig. 8 is a schematic diagram of an execution device for the program string according to an exemplary embodiment.
Fig. 9 is a block diagram of an execution device for the program string according to an exemplary embodiment.
Fig. 10 is a structural diagram of a server according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

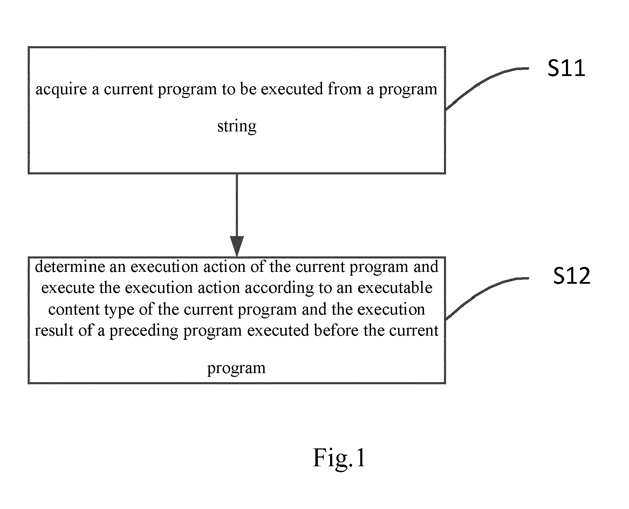

Fig. 1 is a flowchart of an execution method for the program string according to an exemplary embodiment. As shown in Fig. 1, the execution method for the program string is used in a terminal, including the following steps.

In the step S11, to acquire a current program to be executed from a program string.

In the step S12, to determine an execution action of the current program and executing the execution action according to an executable content type of the current program and an execution result of a preceding program executed before the current program.

In one embodiment, the method further includes: acquiring a preset program string after detecting a triggering execution instruction of the program string; determining the current program in sequence according to a sequence of program commands in the program string; after detecting that the current program is executed over or has begun to be executed, serving a next program of the current program in the program string as the current program, until all the programs in the program string are executed over.

In one embodiment, at the time of setting the program string, an optional program identification for adding a program is displayed after detecting a triggering addition instruction of an addition program in a program string setting page;
the selected optional program identification is added to the program string; wherein, the optional program identification is used for identifying and initiating a corresponding program.

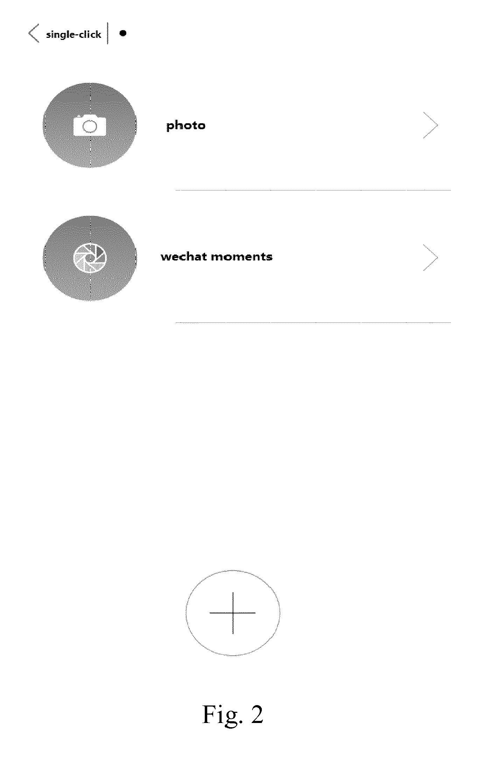

As shown in Fig. 2, there is only photo program in the "single-click" program string, using "photo" in Fig. 2 as the program identification. It can click the addition program button "+" in Fig. 2 to generate a triggering addition instruction and then display the optional program identification for adding programs at the time of adding other programs to the "single-click" program string. The optional program identification may be forms of word, figure and the combination thereof. Assume the selected optional program identification to be "wechat moments", then the optional program identification will be added to and displayed in the program string, locating below the "photo" program.

In one embodiment, at the time of setting the program string, the selected optional program identification is moved to a target sequence position after detecting a triggering movement instruction of any one of the optional program identifications in the program string; wherein, an execution sequence of the program corresponding to the moved optional program identification correspondingly moves to the target sequence position. For example, the locations of the two programs in Fig. 2 may be moved.

In one embodiment, acquiring a currently executed program command from the program string includes: acquiring the currently executed program command from the program string after detecting that the adjacent last program is executed over or the adjacent last program has begun to be executed. As shown in Fig. 2, the current program "photo" to be executed in the program string is acquired firstly when initiating the execution of the program string by triggering execution instructions such us single-click, and the current program is the first program in the program string, so photo action is executed directly. Then, the next program (share) in the program string is acquired as the current program.

In one embodiment, determining the execution action of the current program and executing the execution action according to the executable content type of the current program and the execution result of the preceding program executed before the current program includes:
acquiring the executable content type of the current program and the execution result of the preceding program executed before the current program; judging whether the execution result of the preceding program belongs to the executable content type of the current program; if belonging to, then serving the execution result of the preceding program as the content of the execution action of the current program and executing the execution action; if not belonging to, then executing the current program.

For example, when the executable content type of the current program includes pictures and multimedia information, if the execution result of the preceding program executed before the current program is generating pictures and/or multimedia information, then the generated pictures and/or multimedia information is served as the execution content at the time of executing the current program. Taking Fig. 2 as example, the content executed by the current program is to share the pictures, and the execution result of the preceding program photo in the program string is generating pictures, and then the pictures generated by the preceding program may be shared directly and the users do not need to choose the generated pictures again. If there are other programs between the two programs shown in Fig. 2, such us record, it does not influence the picture sharing action. Because all the preceding programs may be traversed at the time of judging the preceding program. Of course, it may be provided to only acquire the adjacent preceding program.

In one embodiment, determining the execution action of the current program and executing the execution action according to the executable content type of the current program and the execution result of the preceding program executed before the current program includes: acquiring the executable content type of the current program and the execution result of the preceding program executed before the current program; if the execution result of the preceding program is in execution, then judging whether the executable content type of the current program belongs to the executable content type of a preceding program command; if the executable content type of the current program belongs to the executable content of the preceding program command, then sending the execution result of the current program to the preceding program in execution while executing the current program. For example, the executable content type of the preceding program command includes pictures and multimedia information, and when the execution result of the preceding program is in execution, if pictures and/or multimedia information is generated when the current program is executed, then the execution result of the current program is sent to the preceding program in execution while executing the current program.

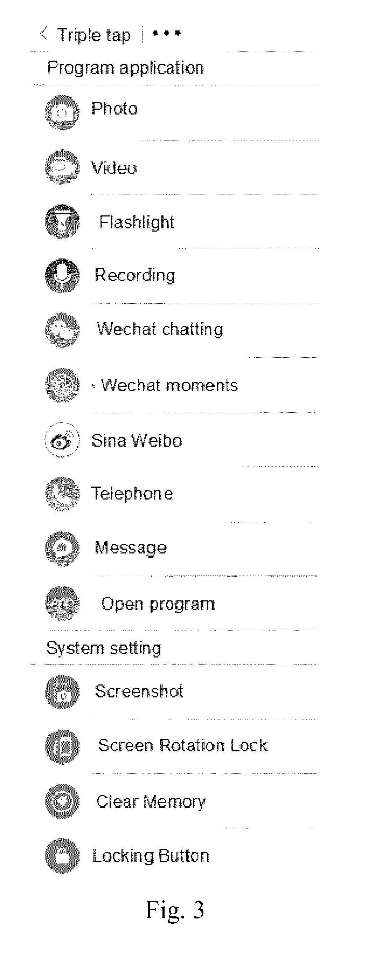

Taking Fig. 3 as example, the program included in the "triple-tap" program string includes in sequence: "photo", "video", "flashlight", "recording", "wechat chatting", "wechat moments", "sina weibo", "making a telephone call", "sending a message" and "opening a program". When the "triple-tap" program string is in execution and "recording" is being executed, the record function is opened and begins to record at this time. When the subsequent program in the program string continues to execute "making a telephone call", it is detected that the audio content generated by "making a telephone call" may be captured by the record function, then the communication audio will be sent to the program corresponding to "recording" to be dealt with. After completing the communication, a hint may be popped up to make the user to conform whether ending the record. Of course, the record may also be ended automatically after all the programs in the "triple-tap" program string are executed over. Alternatively, when the program corresponding to "wechat moments" is being executed, to set the pictures generated by the program corresponding to "photo", the images generated by the program corresponding to "video" and the audio generated by the program corresponding to "recording" as the sharing content, skipping to the sharing page and finishing the record at this time. Alternatively, to continue to record after judging the program corresponding to "wechat moments" not supporting audio information, and end the record until a program supporting the audio information is being executed.

In one embodiment, at the time of executing the current program, an interface of the current program is displayed. Taking Fig. 3 as example, a photo interface is displayed and photos are taken automatically to save the generated picture at the time of executing the program corresponding to "photo". The sharing page in the wechat moments is displayed, the generated picture is set as the shared content, uploading the picture after receiving the corresponding confirmation instruction, or uploading the generated picture as shared content directly at the time of executing the program corresponding to "wechat moments". The dial interface is displayed at the time of executing the program corresponding to "communication".

From the above description, it can be seen that the method provided by the embodiments of the present disclosure, when executing a program string composed by multiple programs, determine the execution action of the current program and execute the execution action according to an executable content type of the current program and an execution result of the preceding program executed before the current program, such that the resource generated by the program execution may be mutually used among all the programs in the program string, providing quick operation more intelligently.

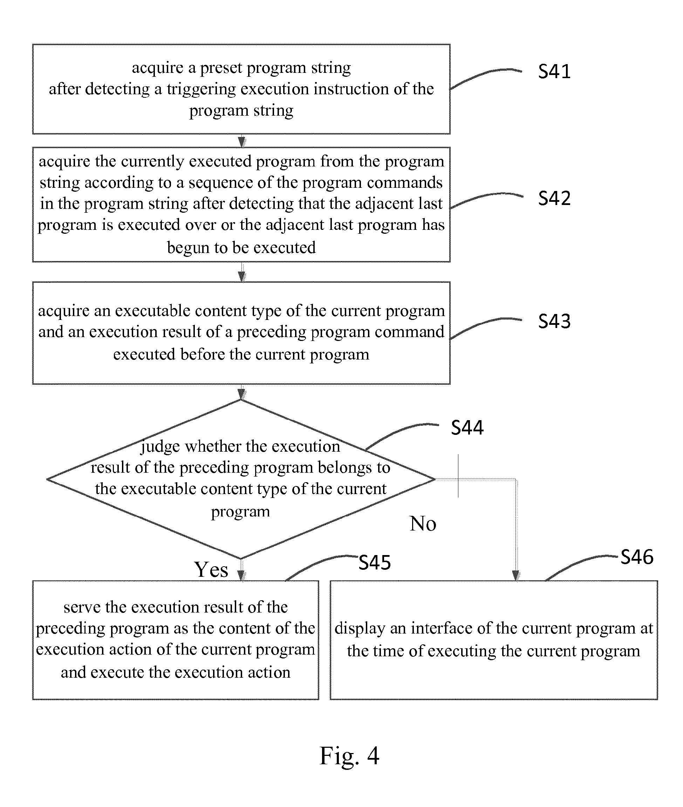

Taking Fig. 2 as example, a further description is made to the execution method for the program string provided by the present invention. Fig. 4 is a flowchart of an execution method for the program string according to an exemplary embodiment. As shown in Fig. 4, the execution method for the program string is used in a terminal, including the following steps.

In the step S41, to acquire a preset program string after detecting a triggering execution instruction of the program string;
In the step S42, to acquire the currently executed program from the program string according to a sequence of the program commands in the program string after detecting that the adjacent last program is executed over or the adjacent last program has begun to be executed.

For example, the program corresponding to the current program "wechat moments" is acquired according to the sequence of the program commands in the program string after detecting that the photo program is executed over.

In the step S43, to acquire the executable content type of the current program and the execution result of the preceding program command executed before the current program.

For example, the executable content type of the current program is a picture, and the execution result of the preceding program command is generating a picture.

In the step S44, to judge whether the execution result of the preceding program belongs to the executable content type of the current program; if belonging to, then executing the step S45; otherwise executing the current program and executing the step S46.

For example, when the executable content type of the current program includes pictures and multimedia information, if the execution result of the preceding program executed before the current program is generating pictures and/or multimedia information, then the generated pictures and/or multimedia information is served as the execution content at the time of executing the current program.

In the step S45, to serve the execution result of the preceding program as the content of the execution action of the current program and execute the execution action.

In the step S46, to display the interface of the current program at the time of executing the current program.

From the above description, it can be seen that when executing a program string composed by multiple programs, the method provided by the embodiment of the present disclosure determines the execution action of the current program and executes the execution action according to an executable content type of the current program and an execution result of the preceding program executed before the current program, such that the resource generated by the program execution may be mutually used among all the programs in the program string, providing quick operation more intelligently.

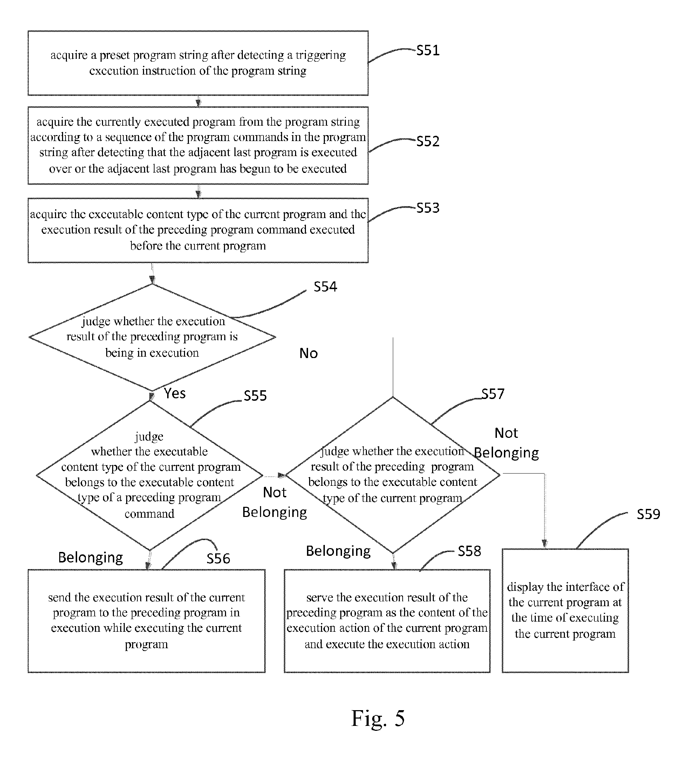

Taking Fig. 3 as example, a further description is made to the execution method for the program string provided by the present invention. Fig. 5 is a flowchart of an execution method for the program string according to an exemplary embodiment. As shown in Fig. 5, the execution method for the program string is used in a terminal, including the following steps.

In the step S51, to acquire a preset program string after detecting a triggering execution instruction of the program string;
In the step S52, to acquire the currently executed program from the program string according to a sequence of the program commands in the program string after detecting that the adjacent last program is executed over or the adjacent last program has begun to be executed.

In the step S53, to acquire the executable content type of the current program and the execution result of the preceding program command executed before the current program.

In the step S54, to judge whether the execution result of the preceding program is in execution, if yes, then executing the step S55; otherwise executing the step S57.

In the step S55, to judge whether the executable content type of the current program belongs to the executable content type of a preceding program command; if belonging to, then executing the step S56; otherwise executing the step S57.

In the step S56, to send the execution result of the current program to the preceding program in execution while executing the current program. Execute the step S59.

In the step S57, to judge whether the execution result of the preceding program belongs to the executable content type of the current program; if belonging to, then executing the step S58; otherwise executing the current program and executing the step S59.

For example, when the executable content type of the current program includes pictures and multimedia information, if the execution result of the preceding program executed before the current program is generating pictures and/or multimedia information, then the generated pictures and/or multimedia information is served as the execution content at the time of executing the current program.

In the step S58, to serve the execution result of the preceding program as the content of the execution action of the current program and execute the execution action.

In the step S59, to display the interface of the current program at the time of executing the current program.

From the above description, it can be seen that when executing a program string composed by multiple programs, the method provided by the embodiment of the present disclosure determines the execution action of the current program and execute the execution action according to an executable content type of the current program and an execution result of the preceding program executed before the current program, such that the resource generated by the program execution may be mutually used among all the programs in the program string, providing quick operation more intelligently.

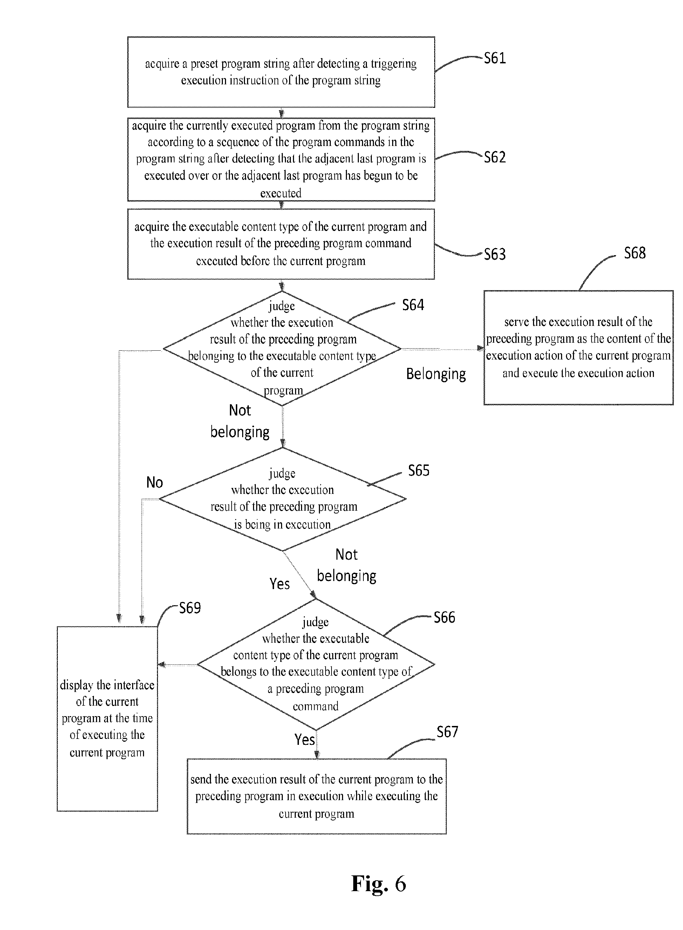

Taking Fig. 3 as example, a further description is made to the execution method for the program string provided by the present invention. Fig. 6 is a flowchart of an execution method for the program string according to an exemplary embodiment. As shown in Fig. 6, the execution method for the program string is used in a terminal, including the following steps.

In the step S61, to acquire a preset program string after detecting a triggering execution instruction of the program string;
In the step S62, to acquire the currently executed program from the program string according to a sequence of the program commands in the program string after detecting that the adjacent last program is executed over or the adjacent last program has begun to be executed.

In the step S63, to acquire the executable content type of the current program and the execution result of the preceding program command executed before the current program.

In the step S64, to judge whether the execution result of the preceding program belongs to the executable content type of the current program; if belonging to, then executing the step S68; otherwise executing the current program and executing the step S69. And continue to execute the step S65.

In the step S65, to judge whether the execution result of the preceding program is being in execution, if yes, then executing the step S66; otherwise executing the step S69.

In the step S66, to judge whether the executable content type of the current program belongs to the executable content type of a preceding program command; if belonging to, then executing the step S67; otherwise executing the step S69.

In the step S67, to send the execution result of the current program to the preceding program in execution while executing the current program. Continue to execute the step S69.

In the step S68, to serve the execution result of the preceding program as the content of the execution action of the current program and execute the execution action.

In the step S69, to display the interface of the current program at the time of executing the current program.

From the above description, it can be seen that when executing a program string composed by multiple programs, the method provided by the embodiment of the present disclosure determines the execution action of the current program and executes the execution action according to an executable content type of the current program and an execution result of the preceding program executed before the current program, such that the resource generated by the program execution may be mutually used among all the programs in the program string, providing quick operation more intelligently.

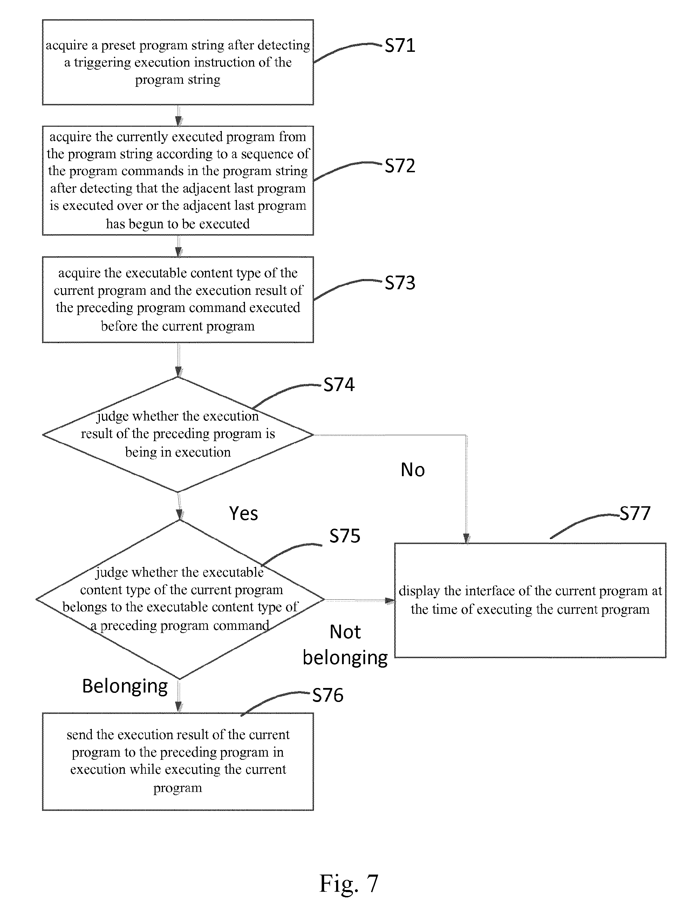

Taking Fig. 3 as example, a further description is made to the execution method for the program string provided by the present invention. Fig. 7 is a flowchart of an execution method for the program string according to an exemplary embodiment. As shown in Fig. 7, the execution method for the program string is used in a terminal, including the following steps.

In the step S71, to acquire a preset program string after detecting a triggering execution instruction of the program string;
In the step S72, to acquire the currently executed program from the program string according to a sequence of the program commands in the program string after detecting that the adjacent last program is executed over or the adjacent last program has begun to be executed.

For example, to acquire the program corresponding to the currently executed program "wechat chatting" from the program string according to the sequence of the program commands in the program string after detecting that the program corresponding to "video" has begun to be executed.

In the step S73, to acquire the executable content type of the current program and the execution result of the preceding program command executed before the current program.

In the step S74, to judge whether the execution result of the preceding program is being in execution, if yes, then executing the step S75; otherwise, executing the step S77.

In the step S75, to judge whether the executable content type of the current program belongs to the executable content type of a preceding program command; if belonging to, then executing the step S76; otherwise executing the current program and executing the step S77.

For example, after detecting that the execution result of the program corresponding to "recording" is being in execution, and the current program is the program corresponding to "communication", then the generated audio may be captured by the "recording" program.

In the step S76, to send the execution result of the current program to the preceding program in execution while executing the current program. For example, the communication audio is sent to the program corresponding to "recording".

In the step S77, to display the interface of the current program at the time of executing the current program.

From the above description, it can be seen that when executing a program string composed by multiple programs, the method provided by the embodiment of the present disclosure determines the execution action of the current program and executes the execution action according to an executable content type of the current program and an execution result of the preceding program executed before the current program, such that the resource generated by the program execution may be mutually used among all the programs in the program string, providing quick operation more intelligently.

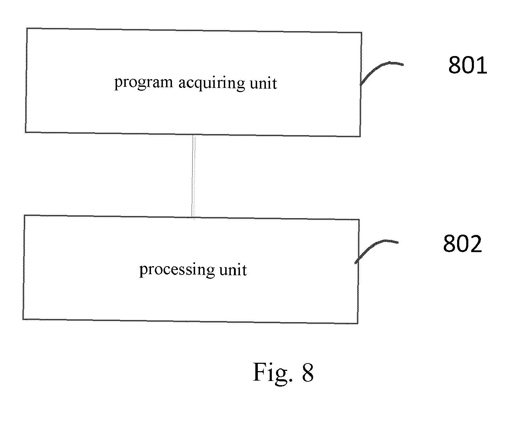

Fig. 8 is a schematic diagram of an execution device for the program string according to an exemplary embodiment. Referring to Fig. 8, the device includes a program acquiring unit 801 and a processing unit 802.

The program acquiring unit 801 is configured to acquire a current program to be executed from the program string.

The processing unit 802 is configured to determine an execution action of the current program and execute the execution action according to an executable content type of the current program and an execution result of a preceding program executed before the current program.

In another embodiment, the device further includes:
a program string acquiring unit, which is configured to acquire a preset program string after detecting a triggering execution instruction of the program string; and
a determining unit, which is configured to determine the current program in sequence according to the sequence of program commands in the program string; after detecting that the current program is executed over or has begun to be executed, serve a next program of the current program in the program string as the current program, until all the programs in the program string are executed over.

In another embodiment, the device further includes:
a setting unit, which is configured to display the optional program identification for adding the program after detecting a triggering addition instruction of an addition program in the program string setting page at the time of setting the program string; add the selected optional program identification to the program string; wherein, the optional program identification is used for identifying and initiating the corresponding program.

In another embodiment, the device further includes:
a moving unit, which is configured to move the selected optional program identification to the target sequence position after detecting a triggering movement instruction of any one of the optional program identifications in the program string at the time of setting the program string; wherein the execution sequence of the program corresponding to the moved optional program identification correspondingly moves to the target sequence position.

In another embodiment, the device further includes:
a program acquiring unit 801, which is configured to acquire the currently executed program command from the program string after detecting that the adjacent last program is executed over or the adjacent last program has begun to be executed.

In another embodiment, the processing unit 802 is configured to acquire the executable content type of the current program and the execution result of the preceding program executed before the current program; judge whether the execution result of the preceding program belongs to the executable content type of the current program; if belonging to, then serve the execution result of the preceding program as the content of the execution action of the current program and executing the execution action; if not belonging to, then execute the current program; or,
acquire the executable content type of the current program and the execution result of the preceding program executed before the current program; if the execution result of the preceding program is being in execution, then judge whether the executable content type of the current program belongs to the executable content type of a preceding program command; if the executable content type of the current program belongs to the executable content of the preceding program command, then send the execution result of the current program to the preceding program in execution while executing the current program.

In another embodiment, the device further includes:
a display unit, which is configured to display an interface of the current program at the time of executing the current program.

As for the devices in the above embodiments, the specific manners for performing operations for individual modules thereof have been described in detail in the embodiments regarding the methods, which will not be elaborated herein.

An execution device for a program string is provided in one embodiment, including:
a processor;
a memory for storing instructions executable by the processor;
wherein, the processor is configured to:
acquire a current program to be executed from the program string; and
determine an execution action of the current program and execute the execution action according to an executable content type of the current program and an execution result of a preceding program executed before the current program.

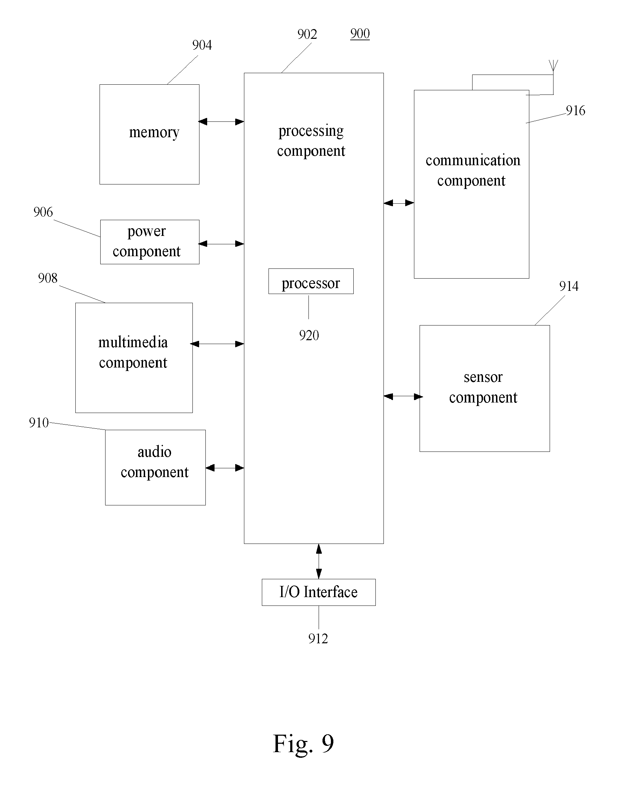

Fig. 9 is a block diagram of an execution device 900 for program string according to an exemplary embodiment. For example, the device 900 may be a mobile phone, a computer, a digital broadcast terminal, a message receiving and sending equipment, a gaming console, a tablet, a medical device, ab exercise equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For example, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and/or the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the device 900 is in an operation mode, such as a call mode, a recording mode, and a voice recognition mode. The received audio signal may be further stored in the memory 904 or transmitted via the communication component 816. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For example, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the device 900, for performing the above-described methods. For example, the non-transitory computer-readable storage medium may be a ROM, a random access memory (RAM), a CD-ROM, a magnetic tape, a floppy disk, an optical data storage device, and the like.

A non-transitory computer-readable storage medium having stored therein instructions that, when executed by a processor of a mobile terminal, cause the mobile terminal to perform a method which includes:
acquiring a current program to be executed from a program string;
determining an execution action of the current program and executing the execution action according to an executable content type of the current program and an execution result of a preceding program executed before the current program.

The method further includes:
acquiring a preset program string after detecting a triggering execution instruction of the program string;
determining the current program in sequence according to a sequence of program commands in the program string;
after detecting that the current program is executed over or has begun to be executed, serving a next program of the current program in the program string as the current program, until all the programs in the program string are executed over.

In one embodiment, at the time of setting the program string, an optional program identification for adding a program is displayed after detecting a triggering addition instruction of an addition program in a program string setting page;
the selected optional program identification is added to the program string;
wherein, the optional program identification is used for identifying and initiating a corresponding program.

In one embodiment, at the time of setting the program string, the selected optional program identification is moved to a target sequence position after detecting a triggering movement instruction of any one of the optional program identifications in the program string;
wherein, an execution sequence of the program corresponding to the moved optional program identification correspondingly moves to the target sequence position.

In one embodiment, acquiring a currently executed program command from the program string includes:
acquiring the currently executed program from the program string after detecting that the adjacent last program is executed over or the adjacent last program has begun to be executed.

In one embodiment, determining the execution action of the current program and executing the execution action according to the executable content type of the current program and the execution result of the preceding program executed before the current program includes:
acquiring the executable content type of the current program and the execution result of the preceding program executed before the current program;
judging whether the execution result of the preceding program belongs to the executable content type of the current program;

if belonging to, then serving the execution result of the preceding program as the content of the execution action of the current program and executing the execution action;
if not belonging to, then executing the current program.

In one embodiment, when the executable content type of the current program includes pictures and multimedia information, if the execution result of the preceding program executed before the current program is generating pictures and/or multimedia information, then the generated pictures and/or multimedia information is served as the execution content at the time of executing the current program.

In one embodiment, determining the execution action of the current program and executing the execution action according to the executable content type of the current program and the execution result of the preceding program executed before the current program includes:
acquiring the executable content type of the current program and the execution result of the preceding program executed before the current program;
if the execution result of the preceding program is being in execution, then judging whether the executable content type of the current program belongs to the executable content type of a preceding program command;
if the executable content type of the current program belongs to the executable content of the preceding program command, then sending the execution result of the current program to the preceding program in execution while executing the current program.

In one embodiment, the executable content type of the preceding program command includes pictures and multimedia information, and when the execution result of the preceding program is in execution, if pictures and/or multimedia information is generated when the current program is executed, then the execution result of the current program is sent to the preceding program in execution while executing the current program.

In one embodiment, at the time of executing the current program, an interface of the current program is displayed.

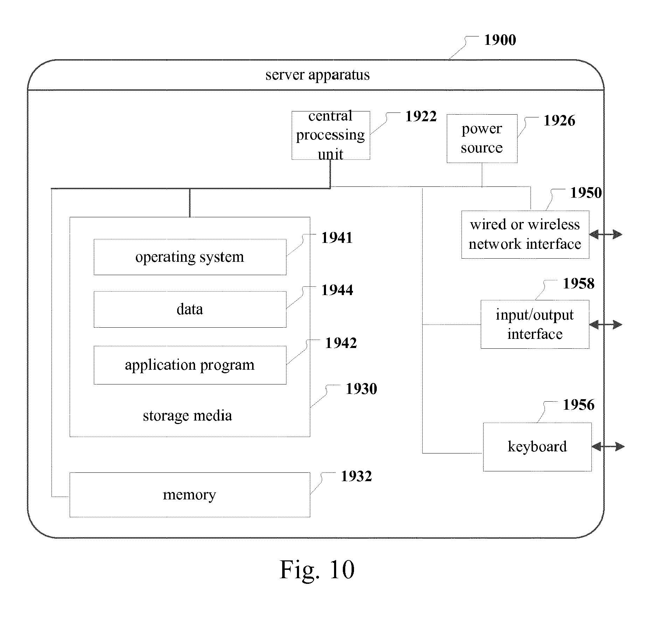

FIG. 10 is a structural diagram of a server according to an embodiment of the present disclosure. The server 1900 may make big difference because of different configurations or performances. It may include one or more central processing units (CPU) 1922 (for example, one or more processors), and a memory 1932, one or more storage media 1930 for storing application program 1942 or data 1944 (for example, one or more mass storage devices). Wherein, the memory 1932 and storage media 1930 may be transient storage or persistent storage. The programs stored in the storage media 1930 may include one or more modules (not shown in the figures), each module including operation corresponding to a set of instructions in the server. Further, the central processing unit 1922 may be configured to communicate with the storage media 1930, execute a set of instruction operations stored in the storage media 1930 on the server 1900.

The server 1900 may also include one or more power sources 1926, one or more wired or wireless network interfaces 1950, one or more input/output (I/O) interfaces 1958, one or more keyboards 1956, and/or, one or more operating systems 1941, such as Windows ServerTM, Mac OS XTM, UnixTM, LinuxTM, FreeBSDTM, or the like.

## Claims

1. A computer-implemented execution method for a program string, **characterized in that** the method comprises:
acquiring (S11) a current program to be executed from a program string; and
determining (S12) an execution action of the current program and executing the execution action according to an executable content type of the current program and an execution result of a preceding program executed before the current program.

2. The execution method for the program string according to claim 1, wherein the method further comprises:
acquiring (S41) a preset program string after detecting a triggering execution instruction of the program string;
determining the current program in sequence according to a sequence of program commands in the program string; and
after detecting that the current program is executed over or has begun to be executed, serving a next program of the current program in the program string as the current program, until all the programs in the program string are executed over.

3. The execution method for the program string according to claim 2, wherein at the time of setting the program string, an optional program identification for adding a program is displayed after detecting a triggering addition instruction of an addition program in a program string setting page; and
the selected optional program identification is added to the program string;
wherein, the optional program identification is used for identifying and initiating a corresponding program.

4. The execution method for the program string according to claim 2 or 3, wherein at the time of setting the program string, the selected optional program identification is moved to a target sequence position after detecting a triggering movement instruction of any one of the optional program identifications in the program string;
wherein, an execution sequence of the program corresponding to the moved optional program identification correspondingly moves to the target sequence position.

5. The execution method for the program string according to claim 1 or 2, wherein acquiring a currently executed program command from the program string comprises:
acquiring the currently executed program from the program string after detecting that the adjacent last program is executed over or the adjacent last program has begun to be executed.

6. The execution method for the program string according to claim 1, wherein determining the execution action of the current program and executing the execution action according to the executable content type of the current program and the execution result of the preceding program executed before the current program comprises:
acquiring (S43, S53) the executable content type of the current program and the execution result of the preceding program executed before the current program;
judging (S44, S57) whether the execution result of the preceding program belongs to the executable content type of the current program; and
if belonging to, then serving the execution result of the preceding program as the content of the execution action of the current program and executing the execution action (S45, S58);
if not belonging to, then executing the current program (S46, S59).

7. The execution method for the program string according to claim 6, wherein when the executable content type of the current program comprises pictures and multimedia information, if the execution result of the preceding program executed before the current program is generating pictures and/or multimedia information, then the generated pictures and/or multimedia information is served as the execution content at the time of executing the current program.

8. The execution method for the program string according to claim 1, wherein determining the execution action of the current program and executing the execution action according to the executable content type of the current program and the execution result of the preceding program executed before the current program comprises:
acquiring the executable content type of the current program and the execution result of the preceding program executed before the current program (S63, S73);
if the execution result of the preceding program is in execution, then judging whether the executable content type of the current program belongs to the executable content type of a preceding program command (S66, S75); and
if the executable content type of the current program belongs to the executable content of the preceding program command, then sending the execution result of the current program to the preceding program in execution while executing the current program (S67, S76).

9. The execution method for the program string according to claim 8, wherein the executable content type of the preceding program command comprises pictures and multimedia information, and when the execution result of the preceding program is in execution, if pictures and/or multimedia information is generated when the current program is executed, then the execution result of the current program is sent to the preceding program in execution while executing the current program.

10. The execution method for the program string according to claim 1, wherein at the time of executing the current program, an interface of the current program is displayed.

11. An execution device for a program string, **characterized in that** the device comprises:
a program acquiring unit (801) configured to acquire (S11) a current program to be executed from the program string; and
a processing unit (802) configured to determine (S12) an execution action of the current program and execute the execution action according to an executable content type of the current program and an execution result of a preceding program executed before the current program.

12. The execution device for the program string according to claim 11, wherein the device further comprises:
a program string acquiring unit configured to acquire (S41) a preset program string after detecting a triggering execution instruction of the program string; and
a determining unit configured to determine the current program in sequence according to the sequence of program commands in the program string; after detecting that the current program is executed over or has begun to be executed, serve a next program of the current program in the program string as the current program, until all the programs in the program string are executed over.

13. The execution device for the program string according to claim 12, wherein the device further comprises:
a setting unit configured to display an optional program identification for adding the program after detecting a triggering addition instruction of an addition program in a program string setting page at the time of setting the program string; and add the selected optional program identification to the program string; wherein, the optional program identification is used for identifying and initiating a corresponding program.

14. The execution device for the program string according to claim 12 or 13, wherein the device further comprises:
a moving unit configured to move the selected optional program identification to a target sequence position after detecting a triggering movement instruction of any one of the optional program identifications in the program string at the time of setting the program string; wherein an execution sequence of the program corresponding to the moved optional program identification correspondingly moves to the target sequence position.

15. The execution device for the program string according to claim 11 or 12, wherein the program acquiring unit (801) is further configured to acquire the currently executed program command from the program string after detecting that the adjacent last program is executed over or the adjacent last program has begun to be executed.

16. The execution device for the program string according to claim 11, wherein the processing unit (802) is configured to acquire the executable content type of the current program and the execution result of the preceding program executed before the current program (S43, S53); judge whether the execution result of the preceding program belongs to the executable content type of the current program (S44, S57); if belonging to, then serve the execution result of the preceding program as the content of the execution action of the current program and execute the execution action (S45, S58); if not belonging to, then execute the current program (S46, S59); or,
acquire the executable content type of the current program and the execution result of the preceding program executed before the current program (S63, S73); if the execution result of the preceding program is in execution, then judge whether the executable content type of the current program belongs to the executable content type of a preceding program command (S66, S75); if the executable content type of the current program belongs to the executable content of the preceding program command, then send the execution result of the current program to the preceding program in execution while executing the current program (S67, S76).

17. The execution device for the program string according to claim 11, wherein the device further comprises:
a display unit configured to display an interface of the current program at the time of executing the current program (S46, S59, S69, S77).

18. An execution device for a program string, **characterized in that** the device (900) comprises:
a processor (920); and
a memory (904) for storing instructions executable by the processor;
wherein, the processor (920) is configured to:
acquire (S11) a current program to be executed from the program string; and
determine (S12) an execution action of the current program and execute the execution action according to an executable content type of the current program and an execution result of the preceding program executed before the current program.

19. A computer program which, when being executed on a processor (920) of a device (800), performs a method according to any one of claims 1 to 10.
